Europäisches Patentamt

European Patent Office

Office européen des brevets

(19)

(11) Veröffentlichungsnummer: **0 008 351**
**B1**

(12)        **EUROPÄISCHE PATENTSCHRIFT**

(45) Veröffentlichungstag der Patentschrift: 24.02.82

(21) Anmeldenummer: **79102385.6**

(22) Anmeldetag: **11.07.79**

(51) Int. Cl.³: **G 01 L 19/14,**
G 01 L 19/06, G 01 L 7/04,
G 01 D 11/26

(54) Flüssigkeitsgefülltes Druckmessgerät.

(30) Priorität: **18.08.78 US 934979**

(43) Veröffentlichungstag der Anmeldung:
**05.03.80 Patentblatt 80/5**

(45) Bekanntmachung des Hinweises auf die Patenterteilung:
**24.02.82 Patentblatt 82/8**

(84) Benannte Vertragsstaaten:
**DE FR GB NL SE**

(56) Entgegenhaltungen:
**CH - A - 591 688**
**DE - A - 2 249 266**
**DE - A - 2 726 851**
**FR - E - 48 218**
**GB - A - 1 094 964**
**US - A - 2 935 873**

(73) Patentinhaber: **Alexander Wiegand GmbH & Co.
Armaturen- und Manometerfabrik
D-8763 Klingenberg (DE)**

(72) Erfinder: **Berninger, Helmut
Lauterhofstrasse 11
D-8751 Eisenbach (DE)**

(74) Vertreter: **Grams, Klaus Dieter, Dipl.-Ing. et al,
Patentanwälte Jaeger, Grams & Pontani
Kreuzweg 34
D-8031 Stockdorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Flüssigkeitsgefülltes Druckmeßgerät

Die Erfindung betrifft flüssigkeitsgefüllte Druckmeßgeräte und insbesondere Druckmeßgeräte mit einem Gehäuse, das eine Umfangswand, eine Rückwand und eine Vorderseite aufweist, mit einer auf der Vorderseite des Gehäuses befestigten, transparenten Sichtscheibe aus steifem Material, mit einem Meßglied im Inneren des Gehäuses, mit einem Meßgliedträger, dessen eines Ende aus dem Gehäuse herausragt und dessen anderes Ende in das Innere des Gehäuses ragt und das Meßglied an einem Ende trägt, mit einem Zeigerwerk mit einem Zeiger, das gelenkig mit dem anderen Ende des Meßgliedes verbunden ist und dessen Zeigerstellung durch die Sichtscheibe beobachtbar ist, und mit einer im Inneren des Gehäuses angeordneten, elastischen Membran, die das Gehäuse auf seiner einen Seite fluiddicht abschließt und eine Kammer begrenzt, die nach außen belüftet ist.

Mittels eines solchen Druckmeßgerätes wird der Druck eines Fluids in der Weise gemessen, daß das Meßglied in seinem Inneren mit dem zu messenden Druck beaufschlagt wird und dadurch verformt wird. Diese Verformung führt zu einer Bewegung seines mit dem Zeigerwerk verbundenen Endes, so daß der Zeiger zumindest annähernd proportional zur Auslenkung des Endes des Meßgliedes und somit zum zu messenden Druck verstellt wird und die Stellung des Zeigers beispielsweise über einem Zifferblatt abgelesen werden kann.

Derartige Druckmeßgeräte sind aus DE - A - 2 249 266, bekannt und sind mit einer Flüssigkeit, beispielsweise Glyzerin, gefüllt. Diese Flüssigkeitsfüllung dient dazu, einerseits die Elemente im Inneren des Gehäuses vor Korrosion zu schützen und andererseits auf das Druckmeßgerät übertragene Schwingungen zu dämpfen, um den Verschließ insbesondere der beweglichen Teile des Druckmeßgerätes gering zu halten. Der Druck der Flüssigkeitsfüllung wirkt auch auf das Meßglied. Dies hat folgenden Nachteil zur Folge. Wenn die Temperatur in der Umgebung des Druckmeßgerätes sich ändert, führt dies auch zu einer Änderung der Temperatur des Flüssigkeit im Gehäuse, die sich dementsprechend auszudehnen oder zusammenzuziehen versucht. Da die Flüssigkeit im Gehäuse eingeschlossen ist, kann sie eine derartige Volumenänderung nicht unbehindert ausführen, so daß sich mit der Änderung der Umgebungstemperatur auch der Druck der Flüssigkeit im inneren des Druckmeßgerätes ändert, was zu Fehlanzeigen des zu messenden Drucks führt.

Um dieses Problem zu lösen, umfaßt das bekannte Druckmeßgerät eine Druckausgleichsvorrichtung. Diese Druckausgleichsvorrichtung umfaßt eine in die Rückwand des Gehäuses eingesetzte elastische Membran, die vom Inneren des Gehäuses einen zur umgebenden Atmosphäre entlüfteten Raum abteilt. Die Volumenänderungen der Flüssigkeitsfüllung werden durch Verformungen der Membran aufgenommen. Nachteilig bei dieser bekannten Druckausgleichsvorrichtung ist, daß zusätzliche Elemente eingebaut werden müssen, die im Inneren des Druckmeßgerätes einen gewissen Raum beanspruchen und das Druckmeßgerät dadurch vergrößern und die außerdem die Kosten des Druckmeßgerätes erhöhen.

Zum Druckausgleich bei flüssigkeitsgefüllten Druckmeßgeräten ist es ferner bereits bekannt, die Sichtscheibe nachgiebig auszubilden, so daß sie den durch Temperaturänderungen hervorgerufenen Volumenänderungen der Flüssigkeitsfüllung im Gehäuse folgen kann und die Temperaturänderungen nur von geringfügigen Änderungen des Drucks der Flüssigkeitsfüllung begleitet sind. Beispiele für solche Druckausgleichsvorrichtungen zeigen die US—PS 3 080 753 und 4 006 639. Dabei wird die Nachgiebigkeit der Sichtscheibe dadurch erreicht, daß sie aus entsprechend dünnem oder weichem Material gefertigt wird. Dies hat jedoch den Nachteil, daß die Sichtscheibe keinen ausreichenden Schutz mehr für das Druckmeßgerät bietet, da sie aufgrund ihrer geringen Festigkeit leicht zerstört werden kann, wenn beispielsweise unbeabsichtigt ein harter Körper gegen die Sichtscheibe stößt. Wenn die Sichtscheibe zerstört ist, ist das gesamte Druckmeßgerät unbrauchbar. Für praktische Anwendungsfälle kommt daher ein Druckmeßgerät mit einer Druckausgleichsvorrichtung in Form einer nachgiebigen Sichtscheibe nicht in Frage.

Der Erfindung liegt die Aufgabe zugrunde, ein flüssigkeitsgefülltes Druckmeßgerät mit einer wenig Raum beanspruchenden und geringe Kosten verursachenden Druckausgleichsvorrichtung zu schaffen.

Ein weiterers Ziel der Erfindung besteht darin, ein flüssigkeitsgefülltes Druckmeßgerät zu schaffen, dessen Vorderseite bei Volumenänderungen der Flüssigkeitsfüllung zum Druckausgleich nachgeben kann, das aber dennoch auf seiner Vorderseite ausreichend stark geschützt gegen Beschädigungen ist.

Diese Aufgabe wird erfindungsgemäß dadurch gelöst, daß die elastische Membran neben der Sichtscheibe auf deren dem Inneren des Gehäuses zugewandter Seite angeordnet ist, aus transparentem Material besteht und zusammen mit der Sichtscheibe die Kammer begrenzt.

Aufgrund der erfindungsgemäßen Ausbildung befindet sich hinter der auf der Vorderseite des Gehäuses außen angeordneten, steifen und ausreichend widerstandsfähigen Sichtscheibe eine Ausgleichskammer, die in Verbindung mit der umgebenden Atmosphäre steht und auf ihrer dem Inneren des Gehäuses zugewandten Seite von der transparenten elastischen Membran begrenzt wird. Diese Membran, die die Betrachtung des Zeigers und des Zifferblattes in keiner Weise beeinträchtigt, ist derartig nachgiebig, daß sie Volumenänderungen der Flüssigkeitsfüllung nur einen sehr geringen Widerstand entgegensetzt, so daß der Druck der Flüssigkeitsfüllung immer annähernd gleich dem Umgebungsdruck ist und Fehlanzeigen durch Druckänderungen der Flüssigkeitsfüllung weitgehend vermieden sind. Da die Ausgleichskammer in ständiger Verbindung mit der umgebenden Atmosphäre steht, kann sich das Volumen der Ausgleichskammer unbehindert der Auslenkung der transparenten Membran anpassen. Die Nachgiebigkeit der Membran erhöht jedoch nicht die Beschädigungsgefahr des Druckmeßgerätes, da vor der Membran die steife Sichtscheibe angeordnet ist, die die transparente Membran ausreichend schützt. Die transparente Membran kann auch als zweite Sichtscheibe betrachtet werden; ebenso können die steife Sichtscheibe und die transparente Membran zusammen als Doppelsichtscheibe mit integrierter Ausgleichskammer angesehen werden.

Da das Gehäuse des Druckmeßgerätes an seiner Vorderseite ohnehin eine Öffnung und Mittel aufweist, die zur Halterung und Abdichtung der steifen Sichtscheibe dienen, und da die elastische Membran vorzugsweise zwischen dem vorderen Rand der Umfangswand des Gehäuses und der steifen Sichtscheibe eingeklemmt wird, erfordert die erfindungsgemäße Ausbildung keine oder nur äußerst geringfügige Änderungen der herkömmlichen Elemente des Druckmeßgerätes. Zusätzliche Öffnungen im Gehäuse für Druckausgleichsvorrichtungen in Form von Balgen oder Membrankammern sind nicht erforderlich. Der Raumbedarf der transparenten Membran ist äußerst gering.

Weitere Ziele, Merkmale und Vorteile der Erfindung ergeben sich aus den Patentansprüchen sowie der folgenden Beschreibung von Ausführungsbeispielen unter Bezugnahme auf die Zeichnungen. Es zeigen:

Figur 1 einen senkrechten Schnitt durch eine bevorzugte Ausführungsform des Druckmeßgerätes;

Figur 2 ausschnittsweise den vorderen Bereich einer weiteren Ausführungsform des Druckmeßgerätes; und

Figur 3 den vorderen Bereich einer wiederum weiteren Ausführungsform des Druckmeßgerätes.

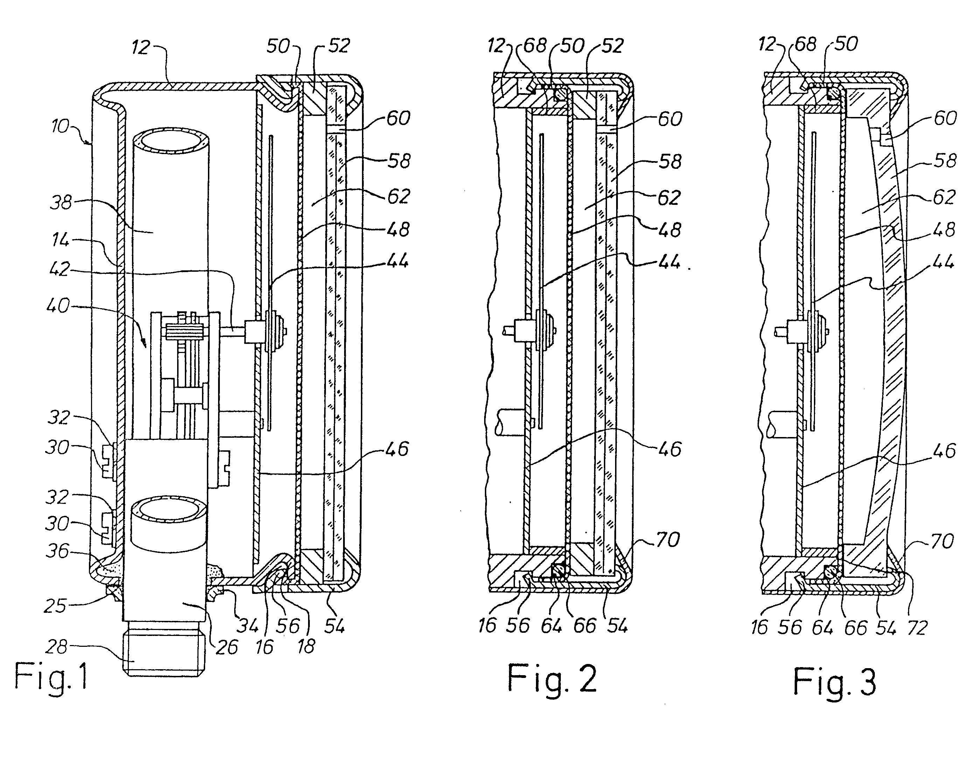

Dans in Figur 1 dargestellte Druckmeßgerät weist ein Gehäuse 10 auf, das eine zylindrische Umfangswand 12 sowie eine Rückwand 14 umfaßt. Das Gehäuse ist aus Blech tiefgezogen, und die zylindrische Umfangswand 12 weist an ihrem vorderen Ende (rechts in Figur 1) eine umlaufende Ausnehmung 16 auf, an die sich eine umgebördelte Schulter 18 anschließt, die eine ungefähr ebene, nach außen weisende Auflagefläche bildet.

Durch eine Öffnung 25 im unteren Abschnitt der Umfangswand 12 ist ein Meßgliedträger 26 so eingesetzt, daß dessen Anschlußende 28 aus dem Gehäuse 10 ragt. Der Meßgliedträger 26 ist mit Hilfe von Schrauben 30 und Federringen 32 fest mit der Rückwand 14 verschraubt. Der Spalt zwischen dem Meßgliedträger 26 und der Öffnung 25 ist mit Hilfe eines von außen aufgepreßten Ringes 34 und eines Dichtungsmittels 36 abgedichtet.

Fest mit dem Meßgliedträger 26 verbunden ist ein Meßglied in Form einer Bourdonfeder 38. Das Innere des Meßgliedes bzw. der Bourdonfeder steht mit einer nicht dargestellten Bohrung im Meßgliedträger in Verbindung. Über diese Bohrung wird die Bourdonfeder mit dem zu messenden Druck beaufschlagt. Das freie Ende der Bourdonfeder ist über nicht dargestellte Mittel gelenkig mit einem Zeigerwerk 40 verbunden, das an sich bekannt ist und daher hier nicht ausführlich beschrieben wird. Das Zeigerwerk 40 wandelt die Auslenkung des freien Endes der Bourdonfeder in eine Drehung einer Zeigerwelle 42 um, auf der ein Zeiger 44 sitzt. Am Zeigerwerk 40 ist ein Zifferblatt 46 befestigt, auf dem die Stellung des Zeigers 44 abgelesen werden kann.

Soweit das Druckmeßgerät vorstehend beschrieben wurde, ist es an sich bekannt. Das Druckmeßgerät kann weitere an sich bekannte Elemente, wie beispielsweise eine nicht dargestellte Einfüllöffnung für die Flüssigkeitsfüllung und ein ausblasbares Verschlußelement aufweisen. Solche Elemente werden hier nicht erläutert, da sie zum Verständnis der Erfindung nicht notwendig sind.

In der Ebene der Auflagefläche an der Schulter 18 des Gehäuses 10 ist eine transparente Membran 48 aus elastischem Material angeordnet, die so nachgiebig ist, daß sie bei einem Druckunterschied zwischen den Drücken auf ihren beiden Seiten ausgelenkt wird, bis der Druckunterschied auf annähernd Null reduziert ist. Am Rand der Membran 48 ist ein Ringflansch 50 angeformt, der die Schulter 18 von außen umgreift. Am Rand der Membran 48 liegt außen ein Abstandsring 52 an, auf dessen Außenseite wiederum eine transparente Sichtscheibe 58 aufliegt, die beim dargestellten Ausführungsbeispiel als ebene Scheibe aus Sicherheitsverbundglas ausgebildet ist. In der Sichtscheibe 58 ist beispielsweise nahe ihrem Rand ein Durchgangsloch 60 ausgebildet. Die Membran 58, der Abstandsring 52 und die Sichtscheibe 58 werden von einem Frontring 54 an der Umfangswand 12 des Gehäuses 10 gehalten. Der Frontring ist auf das vordere Ende der Umfangswand geschoben und weist zumindest eine Klaue 56 auf, die in die Ausnehmung 16 greift. Der Frontring 54 ist an seinem vorderen, in Figur 1 rechten Ende, nach innen so umgebördelt, daß sich sein freier Rand auf der Sichtscheibe 58 abstützt. Aufgrund der Elastizität der Klauen 56 und des umgebördelten Randes des Frontringes 54 werden die Sichtscheibe 58, der Abstandsring 52 und die transparente Membran 48 ausreichend elastisch gegen die Auflagefläche an der Schulter 18 gedrückt, wobei bei geeigneter Weichheit des Materials der Membran 48 die Dichtwirkung zwischen dem Rand der Membran und der Auflagefläche an der Schulter 18 ausreicht, um das Innere des Gehäuses 10 fluiddicht abzuschließen.

Die transparente Membran 48, der Abstandsring 54 und die Sichtscheibe 58 begrenzen zwischen sich eine Ausgleichskammer 62, die über das Durchgangsloch 60 mit der umgebenden Atmosphäre in Verbindung steht.

Bei einem herkömmlichen Manometer der in Figur 1 dargestellten Art, d.h. einem Manometer ohne transparente Membran 48, ist zwischen der Sichtscheibe 58 und der Auflagefläche an der Schulter 18 ein Dichtungsring angeordnet. Beim erfindungsgemäßen Druckmeßgerät erfordern die transparente Membran 48 und der Abstandsring 52 den gleichen oder lediglich einen etwas größeren Einbauraum als bei einem herkömmlichen Druckmeßgerät der Dichtungsring. Um die transparente Membran 48 und den Abstandsring 52 einbauen zu können, ist daher allenfalls eine geringfügige Verlängerung des Frontringes 54 erforderlich.

Das vom Gehäuse 10 und der transparenten Membran 48 begrenzte Innere des Druckmeßgerätes ist mit Flüssigkeit gefüllt. Wenn sich die Flüssigkeitsfüllung beispielsweise aufgrund eines Temperaturanstiegs ausdehnt, wird die transparente Membran 48 nach außen, d.h. nach rechts in Figur 1, ausgelenkt, wobei das Volumen der Ausgleichskammer 62 abnimmt. Da die transparente Membran der Volumenzunahme der Flüssigkeitsfüllung folgt, führt die Temperaturerhöhung der Flüssigkeitsfüllung nicht zu einem übermäßigen Druckanstieg im Inneren des Gehäuses. Durch die steife und ausreichend widerstandsfähige Sichtscheibe 58 vor der transparenten Membran 48 ist das Druckmeßgerät auch auf seiner Vorderseite ausreichend geschützt.

Die transparente Membran 48 besteht vorzugsweise aus Kunststoff. Trotz der Elastizität der Membran 48 läßt sich nicht verhindern, daß diese der Ausdehnung der Flüssigkeitsfüllung einen gewissen Widerstand entgegensetzt, der eine geringe Druckerhöhung im Gehäuse 10 zur Folge hat. Eine geringe Druckerhöhung ist jedoch sogar zweckmäßig. Steigende Temperatur hat eine Änderung des Elastizitätsmoduls des Meßgliedes 38 zur Folge, die wiederum eine Fehlanzeige zur Folge hat. Bei einer Temperaturzunahme sind die Fehlanzeige aufgrund der temperaturbedingten Druckzunahme der Flüssigkeitsfüllung und die Fehlanzeige aufgrund der temperaturbedingten Änderung des Elastizitätsmoduls des Meßgliedes gegensinnig. Daher kompensieren sich diese Fehlanzeigen zumindest teilweise. Vorzugsweise ist die Elastizität der Membran 48 so gewählt, daß der Druck der Flüssigkeitsfüllung um 0,007 bar oder etwas mehr zunimmt, wenn das Volumen der Flüssigkeitsfüllung aufgrund einer Temperaturerhöhung um ein Prozent zunimmt. Es wurde gefunden, daß sich dann die beiden genannten Fehlanzeigen annähernd kompensieren.

In Figur 2 ist eine weitere Ausführungsform eines erfindungsgemäßen Druckmeßgerätes dargestellt, wobei der hintere Abschnitt weggelassen ist. In Figur 2 bezeichnen gleiche Bezugszeichen gleiche Elemente wie bei der Ausführungsform gemäß Figur 1. Die Ausführungsform gemäß Figur 2 unterscheidet sich von der Ausführungsform gemäß Figur 1 dadurch, daß das Gehäuse in Pressguß aus Metall, beispielsweise Messing, hergestellt ist und am vorderen Rand der Umfangswand 12 eine Ringnut 64 ausgebildet ist, in der eine O-Ringdichtung 66 sitzt, die innen am Rand der transparenten Membran 48 anliegt und für verbesserte Abdichtung des Inneren des Gehäuses sorgt. Zwischen der transparenten Membran 48 und dem Zifferblatt 46 ist ein Blendring 68 angeordnet, und über den Frontring 54 sowie die Umfangswand 12 des Gehäuses ist eine Hülse 70 geschoben, die auf die Umfangswand 12 geklemmt ist.

Bei einem herkömmlichen Druckmeßgerät ohne transparente Membran 48 liegt der innere Rand der Sichtscheibe 58 direkt an der O-Ringdichtung 66 an. Der Einbau der transparenten Membran 48 und des Abstandsringes 52 erfordert somit lediglich eine geringe Verlängerung des Frontringes 54.

Die Wirkungsweise der Ausführungsform gemäß Figur 2 stimmt mit der Wirkungsweise der Ausführungsform gemäß Figur 1 überein.

In Figur 3 ist eine weitere Ausführungsform eines erfindungsgemäßen Druckmeßgerätes dargestellt, wobei wiederum der hintere Teil des Druckmeßgerätes weggelassen ist. Die Ausführungsform gemäß Figur 3 unterscheidet sich von der Ausführungsform gemäß Figur 2 lediglich darin, daß sie keinen Abstandsring aufweist, und daß statt einer ebenen Sichtscheibe aus Sicherheitsverbundglas eine Sichtscheibe 58 vorgesehen ist, die aus einer etwas nach außen gewölbten Scheibe aus Kunststoff mit einem innen ebenen Rand 72 besteht, der direkt auf dem Rand der Membran 48 aufliegt. Der für die Ausgleichskammer 62 erforderliche Raum wird dabei durch die Wölbung der Sichtscheibe 58 gewonnen. Eine Verlängerung des Frontringes 54 ist somit nicht erforderlich. Die Druckausgleichsvorrichtung in Form der transparenten Membran 48 und der nach außen entlüfteten Ausgleichskammer 62 erfordert somit minimalen zusätzlichen Einbauraum und keine Modifikationen der übrigen Einbauelemente des Druckmeßgerätes. Die Ausführungsform gemäß Figur 3 zeichnet sich somit durch geringsten Raumbedarf und sehr niedrige zusätzliche Kosten aus. Ihre Wirkungsweise stimmt mit der Ausführungsform gemäß Figur 1 überein.

Obwohl die Erfindung vorstehend anhand von speziellen Ausführungsbeispielen erläutert wurde, ist sie nicht auf diese Ausführungsbeispiele beschränkt. Es sind zahlreiche Abwandlungen und Änderungen möglich, ohne den Rahmen der durch die Ansprüche definierten Erfindung zu verlassen. Zu dem möglichen Abwandlungen der vorstehend beschriebenen Ausführungsbeispiele gehört beispielsweise, daß in Abwandlung der Ausführungsform gemäß Figur 3 die Sichtscheibe und die transparente Membran oder in Abwandlung der Ausführungsformen gemäß den Figuren 1 und 2 die Sichtscheibe, der Abstandsring und die transparente Membran vor dem Einbau in das Druckmeßgeräte beispielsweise durch Kleben oder Schweißen fest miteinander verbunden werden, so daß diese Elemente zusammen eine Doppelsichtscheibe mit integrierter Ausgleichskammer bilden. Ferner kann auch in Abwandlung der Ausführungsform gemäß Figur 3 der Rand 72 statt an der Sichtscheibe 58 einstückig an der Membran 48 ausgebildet sein, wobei dann die Sichtscheibe in den Rand 72 eingeklemmt, eingeklebt oder auf andere Weise mit dem Rand verbunden ist. Wesentlich ist lediglich, daß die Vorderseite des Gehäuses des Druckmeßgerätes von zwei transparenten Elementen abgeschlossen wird, die zwischen sich eine nach außen entlüftete Ausgleichskammer begrenzen und von denen das äussere Element die zum Schutz der Druckmeßgerätes und gegebenenfalls zum Schutz von Personen vor dem Druckmeßgerät erforderliche mechanische Festigkeit hat und denen das innere Element so nachgiebig ist, daß es Druckunterschiede auf seinen beiden Seiten durch Auslenkung weitgehend abbaut.

## Patentansprüche

1. Flüssigkeitsgefülltes Druckmeßgerät, mit einem Gehäuse, das eine Umfangswand, eine Rückwand und eine Vorderseite aufweist, mit einer auf der Vorderseite des Gehäuses befestigten, transparenten Sichtscheibe aus steifem Material, mit einem Meßglied im Inneren des Gehäuses, mit einem Meßgliedträger, dessen eines Ende aus dem Gehäuse herausragt und dessen anderes Ende in das Innere des Gehäuses ragt und das Meßglied an einem Ende trägt, mit einem Zeigerwerk mit einem Zeiger, das gelenkig mit dem anderen Ende des Meßgliedes verbunden ist und dessen Zeigerstellung durch die Sichtscheibe beobachtbar ist, und mit einer im Inneren des Gehäuses angeordneten elastischen Membran, die das Gehäuse auf seiner einen Seite fluiddicht abschließt und eine Kammer begrenzt, die nach außen belüftet ist, dadurch gekennzeichnet, daß die elastische Membran (48) neben der Sichtscheibe (58) auf deren dem Inneren des Gehäuses (10) zugewandter Seite angeordnet ist, aus transparentem Material besteht und zusammen mit der Sichtscheibe (58) die Kammer (62) begrenzt.

2. Druckmeßgerät nach Anspruch 1, dadurch gekennzeichnet, daß die Sichtscheibe (58) eine ebene Scheibe aus Sicherheitsverbundglas ist und daß zwischen dem Rand der Sichtscheibe und dem Rand der Membran (48) ein Abstandsring (52) angeordnet ist.

3. Druckmeßgerät nach Anspruch 1, dadurch gekennzeichnet, daß die Sichtscheibe (58) eine etwas nach außen gewölbte Scheibe aus Kunststoff mit einem innen ebenen Rand (72) ist, an dem direkt der Rand der Membran (48) anliegt.

4. Druckmeßgerät nach einem der Ansprüche 1 bis 3, dadurch gekennzeichnet, daß am Rand der Membran ein Ringflansch (50) ausgebildet ist, der außen an der Umfangswand (12) des Gehäuses (10) anliegt.

5. Druckmeßgerät nach einem der Ansprüche 1 bis 4, dadurch gekennzeichnet, daß am vorderen Rand der Umfangswand (12) des Gehäuses (10) eine Ringnut (64) ausgebildet ist, in der eine O-Ringdichtung (66) angeordnet ist, die dichtend am Rand der Membran (48) anliegt.

6. Druckmeßgerät nach einem der Ansprüche 1 bis 5, dadurch gekennzeichnet, daß die elastische Membran (48) der Volumenzunahme der Flüssigkeitsfüllung zumindest einen solchen Widerstand entgegensetzt, daß der Druck der Flüssigkeitsfüllung um 0,007 bar zunimmt, wenn das Volumen der Flüssigkeitsfüllung aufgrund einer Temperaturerhöhung un ein Prozent, zunimmt.

## Revendications

1. Manomètre rempli de liquide, comprenant un boîtier qui comporte une paroi périphérique, une paroi arrière et une face avant, une vitre transparente en matiere rigide fixée sur la face avant du boîtier, un organe de mesure logé à l'intérieur du boîtier, un support d'organe de mesure dont une extrémité fait saillie à l'extérieur du boîtier et dont l'autre extrémitré fait saillie à l'intérieur du boîtier et porte l'organe de mesure par une extrémité, un mécanisme à aiguille muni d'une aiguille, qui est relié de façon articulée à l'autre extrémité de l'organe de mesure et dont la position de l'aiguille peut être observée à travers la vitre, ainsi qu'une membrane élastique disposée à l'intérieur du boîtier, fermant le boîtier à joint étanche aux fluides sur l'une de ses faces et délimitant une chambre qui est mise à l'air libre sur l'extérieur, caractérisé en ce que la membrane élastique (38) est disposée à côté de la vitre (58), sur le côté de cette vitre tourné vers l'intérieur du boîtier (10), est faite d'une matière transparente et délimite la chambre (62) en combinaison avec la vitre (58).

2. Manomètre suivant la revendication 1, caractérisé en ce que la vitre (58) est une vitre plane en verre stratifié de sécurité et en ce qu'entre le bord de la vitre et le bord de la membrane (48) est disposée une bague entretoise (52).

3. Manomètre suivant la revendication 1, caractérisé en ce que la vitre (58) est un disque en matière plastique légèrement bombé vers l'extérieur et muni d'un bord intérieurement plat (72) contre lequel le bord de la membrane (48) est directement appliqué.

4. Manomètre suivant l'une des revendications 1 à 3, caractérisé en ce qu'au bord de la membrane est formé un collet annulaire (50) qui est appuyé extérieurement sur la paroi périphérique (12) du boîtier (10).

5. Manomètre suivant l'une des revendications 1 à 4, caractérisé en ce que dans le bord avant de la paroi périphérique (12) du boîtier (10) est formée une gorge annulaire (64) dans laquelle est disposée une bague d'étanchéité torique (66) qui est appuyée à joint étanche contre le bord de la membrane (48).

6. Manomètre suivant l'une des revendications 1 à 5, caractérisé en ce que la membrane élastique (48) oppose à l'augmentation de volume du remplissage de liquide une résistance au moins telle que la pression du remplissage de liquide s'élève de 0,007 bars lorsque le volume du remplissage de liquide s'élève d'un pour cent par suite d'une élévation de la température.

**Claims**

1. A liquid-filled manometer comprising a housing including a circumferential wall, a rear wall and a front side, a transparent window of stiff material secured to the front of said housing, a measuring means in the interior of said housing, a measuring means support one end of which projects out of said housing and the other end of which projects into the interior of said housing and supports the measuring means at one end, a pointer mechanism having a pointer articulately connected with the other end of the measuring means and whose pointer position is adapted to be observed through said window, and an elastic diaphragm which is disposed in the interior of said housing, which seals the housing on one side to prevent fluid leakage and which defines a chamber which vents to the atmosphere, characterized in that the elastic diaphragm (48) is located adjacent to the window (58) on the side facing towards the interior of said housing (10), consists of a transparent material and, together with said window (59), defines said chamber (62).

2. The manometer according to claim 1, wherein the window (58) is a flat disk of compound glass and that a spacing ring (52) is disposed between the edge of said window and the edge of said diaphragm (48).

3. The manometer according to claim 1, wherein the window (58) is a somewhat concave disk of plastic with a flat inner edge (72) against which the edge of the diaphragm (48) abuts directly.

4. The manometer according to one of claims 1 to 3, wherein an annular flange (50) is formed on the edge of said diaphragm which abuts externally against the circumferential wall (12) of said housing (10).

5. The manometer according to one of claims 1 to 4, wherein an annular groove (64) is formed on the front edge of the circumferential wall (12) of said housing (10) in which an O-shaped annular seal (66) is located which sealingly abuts against the edge of said diaphragm (48).

6. The manometer according to one of claims 1 to 5, wherein the elastic diaphragm (48) counteracts the increase in volume of the liquid filling by at least such a resistance that the pressure of the liquid filling increases by 0.007 bar when owing to a temperature rise the volume of the liquid filling increases by one per cent.

Fig.1

Fig. 2

Fig. 3

0008351